# EUROPÄISCHE PATENTSCHRIFT

(11) **EP 2 400 172 B1**
(45) Veröffentlichungstag und Bekanntmachung des Hinweises auf die Patenterteilung: **31.10.2012**
(21) Anmeldenummer: 10167206.1
(22) Anmeldetag: 24.06.2010
(51) Int. Cl.: F16C 19/36, F16C 33/60, F16C 33/78, F16C 41/04

(54) **Wälzkörpereinheit mit geteiltem Aussenring und Transportring**
Rolling element bearing unit with splitted outer ring and transport ring
Unité de roulement avec bague extérieure divisée et anneau de transport

(43) Veröffentlichungstag der Anmeldung: 28.12.2011
(73) Patentinhaber: Schaeffler Technologies AG & Co. KG, 91074 Herzogenaurach (DE)
(72) Erfinder: Heuberger, Robert, 97422 Schweinfurt (DE); Schäfer, Marc-André, 97532 Uechtelhausen (Zell) (DE)

(56) Entgegenhaltungen:
- DE-A1-102007 036 695
- GB-A- 1 209 328
- JP-A- 2003 004 035
- JP-A- 2003 166 550

## Beschreibung

### Gebiet der Erfindung

Die Erfindung betrifft einen Transportring, der zum Sichern der Positionen von Bauteilen innerhalb einer Wälzlagereinheit, insbesondere einer Radlagereinheit, vorgesehen ist, sowie eine Wälzlagereinheit mit einem solchen Transportring.

### Hintergrund der Erfindung

So genannte auswechselbare Wälzlagereinheiten, insbesondere Radlagereinheiten, wie beispielsweise für Nutzfahrzeuge, kommen dann zum Einsatz, wenn eine ordnungsgemäße Installation eines Radlagers, welches in der Regel aus mindestens zwei Radlagereinheiten besteht, nicht in einer Kfz-Werkstatt möglich ist.

Für die Installation eines Radlagers sind eine saubere Umgebung und zahlreiche Vorsichtsmaßnahmen bei der ordnungsgemäßen Installationen unabkömmlich. Leider kann diesen Maßnahmen unter Extrembedingungen, wie z.B. in einer Wüste, nicht nachgekommen werden. Durch eine Verschmutzung des Wälzraumes büßt man in der Regel Lebensdauer des Radlagers ein, wenn dieses nicht sogar ganz ausfällt.

Denkbar ist hier der Einsatz von austauschbaren Radlagereinheiten, deren Wälzraum während der Installation nicht geöffnet werden muss und damit keine Verschmutzung des Wälzraumes riskiert wird. Allerdings ist hierbei der Materialaufwand, beispielsweise bei einem Radlager der dritten Generation, relativ hoch, womit das Radlager teuer wird und sich außerdem ein Transportproblem einstellt. Nachteiliger Weise muss auch jedes Mal bei einem Wechsel des Radlagers die Radnabe ausgetauscht werden.

Deshalb hat man in der Vergangenheit so genannte Insert-Radlagereinheiten, insbesondere Insert-Kegelrollenlagereinheiten, entwickelt, die in einem vorinstallierten Zustand ausgeliefert und transportiert werden können ohne den Wälzraum unnötigerweise bei der Installation oder anderweitig zu exponieren. Die Insert-Radlagereinheiten werden im vormontierten Zustand seitlich in den Radträger, beziehungsweise auf die Radnabe gepresst.

Eine derartige Insert-Radlagereinheit ist aus WO 2007/115 539 A1 bekannt. Zwei dieser Insert-Kegelrollenlagereinheiten bilden zusammen ein zweireihiges Radlager für ein Nutzfahrzeug. Diese werden nacheinander in die Radnabe eingepresst und deren Innenringe mit einem Transportring miteinander verbunden.

Die Außenringe der Insert-Radlagereinheiten weisen im Gegensatz zu den Außenringen der üblichen Radlagereinheiten eine relativ große axiale Breite auf, damit eine Dichtungsanordnung zwischen Außen- und Innenring auch während des Transportes den Wälzraum abdichtet. Zusätzlich ist auf der axial gegenüberliegenden Seite zumindest ein Haltering vorgesehen, der Innen- und Außenring der einreihigen Radlagereinheit zueinander in Position hält. Dadurch wird gleichzeitig gewährleistet, dass die Dichtungsanordnung aufgrund der optimalen Position der beiden Lagerringe zueinander auch optimal dichtend abschließt.

Herkömmliche Radlagereinheiten werden meist ohne eingesetzte Dichtungsanordnung ausgeliefert und benötigen deshalb auch keinen axial verbreiterten Außenring. Da diese Radlagereinheiten normalerweise in einer Werkstatt mit optimalen Installationsbedingungen montiert werden, reicht es für den Transport völlig aus eine entsprechende Verpackung, beispielsweise mit einer Plastikverschweißung, zu verwenden.

Nun ergibt sich für den Wälzlagerhersteller die Problematik, dass dieser sowohl normale Radlagereinheiten, als auch die erwähnten Insert-Radlagereinheiten für seine Kunden vorhalten muss. Dazu müssen mindestens zwei verschiedene Außenringe produziert und gelagert werden, was insbesondere im Hinblick auf die Präzisionsanforderungen dieses Bauteils, zu hohen Kosten führt.

Ein weiteres Kegelrollenlager mit mechrteiligem Außenring für eine Kollenmühle ist im Übrigen aus JP 2003-4035A bekannt, Dont dient ein zweiter Teil des Außenrings zur Aufnahme einer Dichtungsanordnung.

### Aufgabe der Erfindung

Der Erfindung liegt die Aufgabe zu Grunde, eine Lehre anzugeben, wie auf der Basis von Bauteilen herkömmlicher Wälzlagereinheiten so genannte Insert-Wälzlagereinheiten gebildet werden können.

Diese Aufgabe wird durch Wälzlagereinheit mit Transportring den in Anspruch 1 angegebenen Merkmalen gelöst.

Die erfindungsgemäße Wälzlagereinheit, insbesondere Radlagereinheit, weist einen Innenring, einen Außenring und Wälzkörperauf, wobei Innenring und Außenring relativ zueinander bewegbar sind und die Wälzkörper zur Lastübertragung zwischen den Wälzlagerringen angeordnet sind. Dabei kann sowohl der Innenring, als auch der Außenring als drehender Wälzkörperring vorgesehen sein.

Eine Dichtungsanordnung ist zur Abdichtung eines Wälzraumes der Wälzkörper sowohl am Innenring als auch am Außenring angeordnet. Dieser Wälzraum kann gegebenenfalls durch eine weitere Dichtungsanordnung oder durch einen axial gegenüberliegenden Haltering begrenzt werden. Ein derartiger Haltering kann neben seiner Funktion, den Innenring und den ersten Teil des Außenringes zueinander zu fixieren, auch eine dichtende Funktion aufweisen. Diese Dichtfunktion kann beispielsweise durch Dichtlippen und/oder durch den Eintrag von Schmiermittel erzielt werden. Die Dichtfunktion des Halteringes ist lediglich während des Handlings und des Transportes der Wälzlagereinheiten notwendig und geht bei Inbetriebnahme der installierten Radlagereinheit gegebenenfalls verloren. Es kann sein, dass in einigen Wälzlageranordnungen die Wälzräume zweier Wälzlagereinheiten dadurch verbunden werden.

Wichtig ist, dass der Außenring mehrteilig ausgeführt ist, wobei der erste Teil des Außenrings zur Lastübertragung und ein zweiter Teil des Außenrings zum Tragen wenigstens eines Dichtelementes der Dichtungsanordnung vorgesehen ist. Der zweite Teil der Außenringes kann beispielsweise als Einpressring ausgeführt sein, der eine oder mehrere der folgenden Funktionen aufweist:
- Unterstützung des Einpressvorgangs des Außenrings,
- schmutzdichter, sicherer Sitz in der Nabe bzw. einem feststehenden Teil, und
- Bereitstellung des Dichtungssitzes für eine Dichtungsanordnung, z.B. einer Kassettendichtung.

Erfindungsgemäβ ist Wälzlagereinheit, insbesondere Radlagereinheit, in einem vormontierten Zustand und weist einen Transportring zum Halten mittels Presssitz und zum teilweisen oder vollständigen Umfassen des ersten und zweiten Teil des Außenringes auf. Ist der Transportring auf diese Weise installiert, sodass er quasi die Radlagereinheit, beziehungsweise einen wesentlichen Anteil derselben umgreift, so ist es vorteilhaft, wenn das Wälzlager bereits in einem vormontierten Zustand ist. Dies bedeutet, dass sämtliche Bauteile, mit Außnahme des Transportringes, betriebsfertig angeordnet sind, und dort wo erforderlich auch gehärtet und geschmiert (befettet oder geölt) sind, sodass eine Installation ohne aufwändige Vorbereitungen durchgeführt werden kann. Insbesondere eine Vorbefettung der Wälzlagereinheit vermeidet ein unbeabsichtigtes Einbringen von Schmutz.

Gegebenenfalls wird durch den Transportring auch eine Vorspannung aufrechterhalten, die zwischen den Wälzlagerringen über die Wälzkörper verläuft. Damit ist die Wälzlagereinheit nicht nur selbsthaltend bei Transport und Handling, sondern sorgt dafür, dass alle Bauteile nicht nur verliersicher zusammengehalten werden, sondern stoßsicher aneinander liegen.

Der erfindungsgemäße Transportring ist zum Halten mittels Presssitz und zum teilweisen oder vollständigen Umfassen eines ersten und eines zweiten Teiles eines Außenringes einer Wälzlagereinheit in einem vormontierten Zustand vorgesehen. Beispielsweise kann der zweite Teil des Außenringes als Einpressring ausgeführt sein, der beim Einpressen zur Kraftübertragung auf den ersten Teil des Außenrings vorgesehen ist. An den ersten Teil des Außenrings ist die Innenlaufbahn der Wälzkörper angeformt. Damit ist der erste Teil zur Lastübertragung vom Außenring über die Wälzkörper zum Innenring des Wälzlagers vorgesehen. Es handelt sich hier um Kegelrollen, die für schwere Nutzfahrzeuge, beziehungsweise eine hohe Lastübertragung geeignet sind .

Der erste und der zweite Teil werden vom Transportring zueinander in der gewünschten Position gehalten. Dabei sind beide Teile zumindest teilweise in den Transportring eingepresst, also mittels Presssitz an diesem befestigt.

Vorteilhafterweise kann der Transportring als Sicherungsring verwendet werden, womit einerseits durch die beiden Teile des Außenringes effektiv eine axiale Breite hergestellt wird, wie sie für sogenannte Insert-Radlagereinheiten erforderlich ist, und gleichzeitig beide Teile für den Transport relativ zueinander in ihrer Position gesichert werden. Hierbei ist nicht notwendig, dass der Transportring den ersten und zweiten Teil des Außenringes in axialer Richtung vollständig umfasst. Eine teilweise Umfassung zumindest eines der beiden Teile ist ebenso denkbar.

Vorteilhafterweise muss der Wälzlagerhersteller nun lediglich den ersten Teil des Außenrings aufwändig fertigen und kann diesen sowohl in einer herkömmlichen Radlagereinheit, als auch in einer Insert-Radlagereinheit verwenden. In der herkömmlichen Radlagereinheit stellt der erste Teil des Außenrings den gesamten Außenring dar.

Vorteilhafterweise ist eine Radlagereinheit mit einem erfindungsgemäßen Transportring ohne Spezialwerkzeuge einfach zu montieren. So wird die Radlagereinheit axial neben der Radnabe oder neben dem Radträger angeordnet und in das jeweilige Bauteil hinein, beziehungsweise, auf dieses auf gepresst, wobei der Transportring in seiner Position verbleibt, während das Wälzlager aus diesem heraus gepresst wird. Es bedarf also weniger, einfacher Einbauschritte, die keine besonderen Anforderungen an die Sauberkeit bei der Montage erfordern.

Vorteilhafterweise bildet ein Transportring mit mindestens einem zweiten Teil des Außenringes einen Umrüstsatz für eine herkömmliche Radlagereinheit, die damit in eine Insert-Radlagereinheit umgewandelt werden kann. Es ist also denkbar den Transportring mit dem zweiten Teil des Außenringes und gegebenenfalls einem Dichtungselement der Dichtungsanordnung oder auch mit der gesamten Dichtungsanordnung, in einem Umrüstsatz zusammenzufassen.

Erfindungsgemäβ ist der zweite Teil des Außenringes zum Tragen eines Dichtungselementes oder einer Dichtungsanordnung vorgesehen. Es ist beispielsweise denkbar, dass die Dichtungsanordnung aus einem Dichtungselement besteht, welches vom zweiten Teil des Außenrings getragen wird und aus einem Dichtungselement besteht, welches vom Innenring getragen wird. Da Innenring und der zweite Teil des Außenrings ebenfalls zueinander eine definierte Position einnehmen, ist die gebildete Dichtungsanordnung während des Betriebes, als auch während des Transports, dichtend abgeschlossen.

Der zweite Teil des Außenrings ist zum teilweisen oder vollständigen Umfassen und Halten des Dichtungselementes oder der Dichtungsanordnung mittels Presssitz vorgesehen.

Vorteilhafterweise besteht der zweite Teil des Außenrings aus einem rostfreien Material (z. B. Stahl, insbesondere rostfreier Stahl, beschichteter Stahl, gummierter Stahl oder Aluminium, insbesondere beschichtetes Aluminium, gummiertes Aluminium) oder weist ein solches auf. Dichtungsanordnungen werden oft leicht von Rost unterwandert, was vorteilhaft mit einem derartigen Material unterbunden werden kann.

Vorteilhafterweise sind das erste und zweite Teil des Außenringes axial zueinander angeordnet. Damit ist es möglich bei der Installation eine Axialkraft zwischen dem ersten und zweiten Teil des Außenrings zu übertragen und beide Teile unmittelbar nebeneinander in die betriebsgemäße Position zu bringen.

Vorteilhafterweise weisen die Teile des Außenrings einen gleichen Außendurchmesser auf. Auf diese Weise können beide durch das gleiche Bauteil mit einem bestimmten Innenradius gleichermaßen in ihrer Position gehalten, beziehungsweise bei der Montage durch eine axiale Bewegung gleichermaßen platziert werden. Weist das Bauteil unterschiedliche Innenradien auf, so sind auch unterschiedliche Außendurchmesser der Außenringteile denkbar.

Die Teile des Außenringes werden mittels eines Transportringes, eines Radträgers oder einer Radnabe zueinander in Position gehalten. Bei diesen Bauteilen handelt es sich um zumindest teilweise den zweiten Teil des Außenrings umfassende Bauteile, die beispielsweise hohlzylindrisch ausgeformt sind.

Ein Transportring umfasst teilweise den ersten und zweiten Teil des Außenringes und sichert über die Teile des Außenringes in Kombination mit einem Haltering die Position aller Lagerringe zueinander, inklusive der Dichtungsanordnung, beziehungsweise deren Dichtungselemente. Der Transportring kann als Sicherungsring ausgeführt sein, der weitere schützende Funktionen hat.

Das von außen umfassende, zylindrische Bauteil kann rotierend sein, wie z.B. eine Radnabe oder auch feststehen, wie z.B. ein Radträger. Beide haben die Funktion die beiden Teile des Außenringes in ihrer Position zueinander, dank der Pressung in das zylindrische Bauteil, fest zueinander anzuordnen.

Vorteilhafterweise kann der Transportring, der Radträger und/oder die Radnabe den abgedichteten Wälzraum zumindest teilweise begrenzen. Auf diese Weise kann Material gespart werden, indem ein axiales Überlappen des zylindrischen Bauteils mit dem Dichtungselement beziehungsweise der Dichtungsanordnung möglichst gering ausfällt, so dass einerseits die Haltefunktion nicht gefährdet ist, aber andererseits eine Lücke zwischen den beiden Teilen des Außenringes überbrückt wird.

Vorteilhafterweise kann der zweite Teil des Außenrings, ebenso wie der erste Teil des Außenrings, den abgedichteten Wälzraum teilweise begrenzen und zur besseren Abdichtung desselben verwendet werden.

Vorteilhafterweise kann der Transportring, ähnlich wie der erste Teil des Außenrings den abgedichteten Wälzraum teilweise begrenzen, nämlich dann, wenn sich erster und zweiter Teil des Außenringes nur teilweise oder gar nicht berühren. Hierdurch kann Material eingespart werden ohne auf optimale Abdichtung verzichten zu müssen.

Weitere vorteilhafte Ausbildungen und bevorzugte Weiterbildungen der Erfindung sind der Figurenbeschreibung und/oder den Unteransprüchen zu entnehmen.

### Figurenbeschreibung

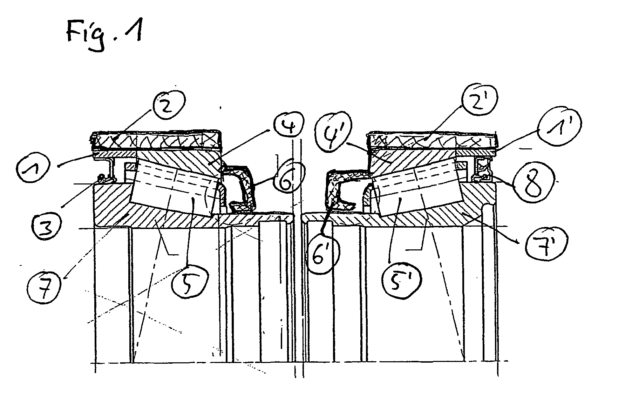

In der Figur sind zwei Kegelrollenlagereinheiten im Längsschnitt zu ihrer Rotationsachse gezeigt. Die Position, die beide zueinander einnehmen, entspricht der Position, die sie als Radlager eines Lastkraftwagens im betriebsfertigen Zustand zueinander einnehmen würden, jedoch tritt an die Stelle der Transportringe 2, 2' eine Radnabe oder ein Radträger. Bei der Installation der Kegelrollenlagereinheiten werden beide gegebenenfalls durch ein (nicht abgebildetes) Verbindungselement axial zueinander fixiert, welches an beiden Innenringen 7,7' angreift.

Beide Kegelrollenlagereinheiten werden vor der Installation vom Transportring 2,2' umfasst. Der Transportring 2,2' hält und umfasst den ersten lasttragenden Teil 4,4' des Außenringes und den zweiten Teil 1,1' des Außenringes, die axial zueinander angeordnet sind jeweils ganz oder teilweise. Der zweite Teil 1,1' des Außenringes kann als Einpressring 1,1', also als ein separates Bauteil, ausgeführt sein, welches zur axialen Kraftübertragung auf den zweiten Teil des Außenringes während des Einpressvorganges vorgesehen ist.

An der linken Kegelrollenlagereinheit ist zu erkennen, dass der Einpressring 1 ein Dichtungselement 3 trägt. Bei der rechten Kegelrollenlagereinheit hingegen ist eine Dichtungsanordnung 8 aus zwei Dichtungselementen gezeigt. Beide Dichtungselemente werden dadurch in einer Position gehalten, sodass erstens der Transportring 2' die beiden Teile 4', 1' des Außenrings zueinander fixiert, und zweitens der Haltering 6' den Transportring 2' und den Außenring 1', 4' gegenüber dem Innenring 7' festhält. Damit ist stets eine optimale Dichtung durch die Dichtungsanordnung 8 gewährleistet.

Auch die Halteringe 6, 6' können neben ihrer Haltefunktion auch eine Dichtfunktion aufweisen, indem beispielsweise die verbleibenden Öffnungen, zum Beispiel eine Spaltöffnung oder auch anders geformte Öffnungen mit Schmiermittel, z.B. Schmierfett oder ÖI, abgedichtet werden.

Damit bilden beide Kegelrollenlagereinheiten sogenannte Insert-Kegelrollenlagereinheiten, die leicht zu handhaben und zu transportieren sind. Bei deren Installation wird lediglich der Transportring 2,2' beim Einpressen der Wälzlagereinheit in beispielsweise ein zylindrisches Trägerbauteil von diesem abgestreift. Das zylindrische Trägerbauteil kann hierbei eine rotierbare Radnabe oder ein feststehender Radträger sein.

Damit die Montage der Insert-Kegelrollenlagereinheiten mit einer einfachen ebenen Platte oder ähnlichem erfolgen kann, ohne dass die Montagekräfte über die Wälzkörper geleitet werden und die Laufbahnen beschädigen, ist die Breite des mehrteiligen Außenringes 1,4,1',4' so bemessen, dass die Montagekräfte über den Außenring 1,4,1',4' geleitet werden. Dies wird dadurch gewährleistet, dass der Einpressring 1,1' als Teil des Außenrings 1,4,1',4' gegenüber dem Innenring 7,7' geringfügig axial herausragt.

Der Überstand des Einpressrings 1,1' ist so bemessen, dass er auch beim Einpressen des Außenringes und der damit verbundenen Einschnürungen des Außenringes 1,4,1',4' und dem daraus resultierenden axialen Versatz des Wälzkörperkontaktpunktes ausreichend groß ist. Somit ist sichergestellt, dass der Innenring 7,7' nachgeführt wird und keine Montagekräfte über die Wälzkörper 5,5' geleitet werden.

Alternativ kann der Einpressring 1,1' in axialer Ricthung zusammen mit dem Innenring 7,7' abschließen, allerdings kann das Einpresswerkzeug dann keine ebene Platte sein, sondern muss teilweise hohlzylindrisch ausgeführt sein, um Druck auf den Innenring 7,7' zu vermeiden.

Die Montage eines zweireihigen Kegelrollenradlagers erfolgt im wesentlichen in 3 Schritten:
A. Montage der ersten Insert-Kegelrollenlagereinheit durch axiales Einpressen, beispielsweise in eine Nabe und vorzugsweise bis zur Anlage an den Nabenbund. Dabei wird der Transportring 2,2', der beispielsweise als Sicherungsring ausgeführt ist, herausgepresst. Dieser wird nicht mehr benötigt und kann entsorgt werden.
B. Montage der zweiten Insert-Kegelrollenlagereinheit durch axiales Einpressen vorzugsweise bis zur Anlage an den Nabenbund. Auch hier wird der Transportring 2,2' ausgepresst und kann entsorgt werden.
C. Montage eines Verbindungselementes durch axiales Einschieben und formschlüssiges Verbinden der Innenringe 7,7'. Alternativ kann ein ringförmiges Verbindungselement bereits an der ersten Insert-Kegelrollenlagereinheit vorinstalliert sein und während der Ausführung von Schritt B am Innenring der zweiten Einheit einschnappen.

Zusammenfassend betrifft die Erfindung Wälzlagereinheiten, insbesondere Insert-Kegelrollenlagereinheiten, mit einem Innenring, mit einem Außenring und mit Wälzkörpern, wobei Innenring und Außenring relativ zueinander bewegbar sind und die Wälzkörper zur Lastübertragung zwischen den Wälzlagerringen angeordnet sind und eine Dichtungsanordnung zur Abdichtung eines Wälzraumes der Wälzkörper sowohl am Innenring, als er am Außenring angeordnet ist. Es soll eine Lehre angegeben werden, wie man für eine Insert-Kegelrollenlagereinheit eine maximale Anzahl von Bauteilen herkömmlicher Kegelrollenlagereinheiten verwenden kann. Dies wird durch einen mehrteiligen Außenring erzielt, wobei ein Teil des Außenrings aus dem Außenring einer herkömmlichen Kugelrollenlagereinheit gebildet wird.

### Bezugszeichenliste

- 1,1': zweiter Teil der Außenrings, Einpressring
- 2,2': Transportring
- 3: Dichtungselement
- 4,4': erster Teil des Außenrings
- 5,5': Wälzkörper
- 6, 6': Halteelement
- 7,7': Innenring
- 8: Dichtungsanordnung

## Patentansprüche

1. Wälzlagereinheit, insbesondere Radlagereinheit, mit einem Innenring (7,7'), mit einem Außenring (4,4',1,1') und mit Kegelrollen (5,5'), wobei der Innenring (7,7') und der Außenring (4,4',1,1') relativ zueinander bewegbar sind und die Kegelrollen (5,5') zur Lastübertragung zwischen den Wälzlagerringen (7,7', 4,4') angeordnet sind und eine Dichtungsanordnung (8) zur Abdichtung eines Wälzraumes der Kegelrollen (5,5') sowohl am Innenring (7,7'), als auch am Außenring (4,4') angeordnet ist, **dadurch gekennzeichnet, dass** der Außenring (4,4',1,1') mehrteilig ausgeführt ist, wobei ein erster Teil (4,4') des Außenrings (4,4',1,1') zur Lastübertragung und ein zweiter Teil (1,1') des Außenrings (4,4',1,1') zum Tragen eines Dichtelementes (3) der Dichtungsanordnung (8) vorgesehen ist und wobei die Wälzlagereinheit in einem vormontierten Zustand, insbesondere vorbefettet, ist und einen Transportring (2,2') zum Halten mittels Presssitz und zum teilweisen oder vollständigen Umfassen des jeweils ersten (4,4') und zweiten Teils (1,1') des Außenrings (1,1',4,4') aufweist.

2. Wälzlagereinheit nach Anspruch 1, wobei der erste (4,4') und zweite Teil (1,1') des Außenrings (1,1', 4,4') axial zueinander angeordnet sind.

3. Wälzlagereinheit nach einem der vorhergehenden Ansprüche, wobei die Teile (1,1',4,4') des Außenrings (1,1',4,4') gleiche oder unterschiedliche Außendurchmesser aufweisen.

4. Wälzlagereinheit nach einem der vorhergehenden Ansprüche, wobei die Teile des Außenringes (1,1',4,4') mittels eines Transportringes (2,2'), eines Radträgers oder einer Radnabe zueinander in Position gehalten werden.

5. Wälzlagereinheit nach Anspruch 4, wobei der Transportring (2,2'), der Radträger oder die Radnabe den abgedichteten Wälzraum teilweise begrenzen.

6. Wälzlagereinheit nach einem der vorhergehenden Ansprüche, wobei der erste Teil (4,4') oder der erste (4,4') und der zweite Teil (1,1') des Außenringes den abgedichteten Wälzraum teilweise begrenzen.

7. Wälzlagereinheit nach Anspruch 1, wobei der zweite Teil (1,1') des Außenringes (1,1',4,4') ein Einstellring (1,1') ist.

8. Wälzlagereinheit nach Anspruch 7, wobei der Einstellring (1,1') zum Tragen eines Dichtungselementes (3) oder einer Dichtungsanordnung (8) vorgesehen ist.

9. Wälzlagereinheit nach Anspruch 8, wobei der Einstellring (1,1') zum teilweisen oder vollständigen Umfassen und Halten mittels Presssitz des Dichtungselementes (3) oder der Dichtungsanordnung (8) vorgesehen ist.

10. Wälzlagereinheit nach einem der Ansprüche 7 bis 9, wobei der Einstelling (1,1') aus einem rostfreien Material besteht oder dieses aufweist.

## Claims

1. Roller bearing unit, in particular wheel bearing unit, with an inner ring (7,7'), with an outer ring (4,4',1,1') and with tapered rollers (5,5'), wherein the inner ring (7,7') and the outer ring (4,4',1,1') are movable relative to one another and the tapered rollers (5,5') are arranged for the transmission of load between the roller bearing rings (7,7',4,4') and a seal arrangement (8) for sealing off of a roller chamber of the tapered rollers (5,5') is arranged both on the inner ring (7,7') and on the outer ring (4,4'), **characterized in that** the outer ring (4,4',1,1') is embodied in several parts, wherein a first part (4,4') of the outer ring (4,4',1,1') is provided for the transmission of load and a second part (1,1') of the outer ring (4,4',1,1') is provided for the support of a seal element (3) of the seal arrangement (8) and wherein the roller bearing unit is in a premounted state, in particular prelubricated, and has a transport ring (2,2') for retention by means of interference fit and for partial or complete enclosure of the in each case first (4,4') and second part (1,1') of the outer ring (1,1',4,4').

2. Roller bearing unit according to Claim 1, wherein the first (4,4') and second part (1,1') of the outer ring (1,1',4,4') are arranged axially with respect to one another.

3. Roller bearing unit according to one of the preceding claims, wherein the parts (1,1',4,4') of the outer ring (1,1',4,4') have the same or a different outer diameter.

4. Roller bearing unit according to one of the preceding claims, wherein the parts of the outer ring (1,1',4,4') are retained in position relative to one another by means of a transport ring (2,2'), a wheel carrier or a wheel hub.

5. Roller bearing unit according to Claim 4, wherein the transport ring (2,2'), the wheel carrier or the wheel hub partially delimit the sealed off roller chamber.

6. Roller bearing unit according to one of the preceding claims, wherein the first part (4,4') or the first (4,4') and the second part (1,1') of the outer ring partially delimit the sealed off roller chamber.

7. Roller bearing unit according to Claim 1, wherein the second part (1,1') of the outer ring (1,1',4,4') is an adjustment ring (1,1').

8. Roller bearing unit according to Claim 7, wherein the adjustment ring (1,1') is provided for support of a seal element (3) or a seal arrangement (8).

9. Roller bearing unit according to Claim 8, wherein the adjustment ring (1,1') is provided for partial or complete enclosure and retention by means of interference fit of the seal element (3) or the seal arrangement (8).

10. Roller bearing unit according to one of Claims 7 to 9, wherein the adjustment ring (1,1') is composed of a rust-free material or has said material.

## Revendications

1. Unité de roulement, en particulier unité de roulement de roue, avec une bague intérieure (7, 7'), avec une bague extérieure (4, 4', 1, 1'), et avec des rouleaux coniques (5, 5'), dans laquelle la bague intérieure (7, 7') et la bague extérieure (4, 4', 1, 1') sont mobiles l'une par rapport à l'autre et les rouleaux coniques (5, 5') sont disposés entre les bagues de roulement (7, 7', 4, 4') pour la transmission de la charge, et un agencement d'étanchéité (8) est disposé aussi bien sur la bague intérieure (7, 7') que sur la bague extérieure (4, 4') pour assurer l'étanchéité d'une chambre de roulement des rouleaux coniques (5, 5'), **caractérisée en ce que** la bague extérieure (4, 4', 1, 1') est réalisée en plusieurs parties, dans laquelle une première partie (4,4') de la bague extérieure (4, 4', 1, 1') est prévue pour la transmission de la charge et une deuxième partie (1, 1') de la bague extérieure (4, 4', 1, 1') est prévue pour supporter un élément d'étanchéité (3) de l'agencement d'étanchéité (8) et dans laquelle l'unité de roulement se trouve dans un état pré-assemblé, en particulier pré-graissé, et présente une bague de transport (2, 2') destinée à maintenir par ajustement serré et à entourer partiellement ou entièrement respectivement la première partie (4, 4') et la deuxième partie (1, 1') de la bague extérieure (1, 1', 4, 4').

2. Unité de roulement selon la revendication 1, dans laquelle la première partie (4, 4') et la deuxième partie (1, 1') de la bague extérieure (1, 1', 4, 4') sont disposées axialement l'une par rapport à l'autre.

3. Unité de roulement selon l'une quelconque des revendications précédentes, dans laquelle les parties (1, 1', 4, 4') de la bague extérieure (1, 1', 4, 4') présentent des diamètres extérieurs égaux ou différents.

4. Unité de roulement selon l'une quelconque des revendications précédentes, dans laquelle les parties de la bague extérieure (1, 1', 4, 4') sont maintenues en position l'une par rapport à l'autre au moyen d'une bague de transport (2, 2'), d'un support de roue ou d'un moyeu de roue.

5. Unité de roulement selon la revendication 4, dans laquelle la bague de transport (2, 2'), le support de roue ou le moyeu de roue limite partiellement la chambre de roulement étanche.

6. Unité de roulement selon l'une quelconque des revendications précédentes, dans laquelle la première partie (4, 4') ou la première partie (4, 4') et la deuxième partie (1, 1') de la bague extérieure limitent partiellement la chambre de roulement étanche.

7. Unité de roulement selon la revendication 1, dans laquelle la deuxième partie (1, 1') de la bague extérieure (1, 1', 4, 4') est une bague de réglage (1, 1').

8. Unité de roulement selon la revendication 7, dans laquelle la bague de réglage (1, 1') est prévue pour supporter un élément d'étanchéité (3) ou un agencement d'étanchéité (8).

9. Unité de roulement selon la revendication 8, dans laquelle la bague de réglage (1, 1') est prévue pour entourer partiellement ou entièrement et maintenir par un ajustement serré l'élément d'étanchéité (3) ou l'agencement d'étanchéité (8).

10. Unité de roulement selon l'une quelconque des revendications 7 à 9, dans laquelle la bague de réglage (1, 1') est composée d'un matériau inoxydable ou en contient.
